# EUROPEAN PATENT APPLICATION

(11) **EP 4 040 025 A1**
(43) Date of publication of application: **10.08.2022**
(21) Application number: 21213118.9
(22) Date of filing: 08.12.2021
(51) Int. Cl.: F16L 11/12, F02M 35/10, F16L 47/16, B29C 49/04

(54) **AN AIR DUCT WITH A SELF-ASSEMBLY PART**

(30) Priority: 09.02.2021 TR 202101823
(71) Applicant: Ozler Teknoloji Hizmetleri Anonim Sirketi, Istanbul (TR)
(72) Inventor: OZADAM, MURAT, Istanbul (TR)
(74) Representative: Kaya, Erdem

(57) **Abstract**

The invention relates to at least one air duct (1) with at least one body (10) through which air can pass, by being manufactured with blow molding, especially for use in air flow in vehicles. A novelty of the invention is that it is characterized in that it comprises at least one connection part (20) with at least one threaded form (22) on it for assembly of said body (10) in a predetermined place, and said connection part (20) for allowing the body (10) to have an internal threaded structure is configured to be positioned in at least one assembly position (II) in which it is folded towards the inner side (15) of the body (10) by at least partially bending from at least one manufacturing position (I) in which it is formed in the blow molding.

## Description

### TECHNICAL FIELD

The invention relates to at least one air duct with at least one body through which air can pass by being manufactured with blow molding, especially for use in air flow in vehicles.

### PRIOR ART

Air ducts are used in many fields in the art. Air ducts are tubular elements that allow air to pass through. They can be used in many regions of vehicles, especially in air conditioning and engine systems in the art. The air ducts used in the engine systems in vehicles, in particular, allow the air to be transmitted to used in the combustion chamber. This type of air ducts can be used to transmit the air purified in the filter to the turbocharger. The compressed air in the turbocharger is then conveyed to the engine.

Air transmission in the engine compartment cannot be provided with a single duct due to the other parts in the vehicle (peripheral parts). Therefore, the air ducts are produced in several parts and installed in the vehicle. Currently, these air ducts are assembled to each other with the help of welding, clips, clamps, or tabs.

Clamp assembly of the air duct requires parts such as clamp and metal bushing. An assembly machine is also required. Deformation may occur during tightening, and waste rates are high in this process. Leakage problems are likely to be encountered in this section over time.

A welding machine is required in the welding assembly of the air duct. Welding operation increases production times and labor costs. It is also necessary to design a welding surface, which increases the use of materials. The welding process causes deformations on the product, shortens the product life.

Additional assembly machine is required when assembling the air duct with clip or attachment. Additional operation increases labor costs. The risk of deformation of the retaining tabs is high, the product life is short, the sealing is low.

Air ducts are manufactured with blow molding in known alternative methods of the art. Plastic macromolecules are shaped by pouring, compressing or flowing into a container with the help of heat and pressure in blow molding. However, the air duct can be shaped only on the outward-facing side of the air duct in this method. The interior is always shaped with the help of air in the plastic blowing process. Shaping the inner part of the air duct is impossible due to the working principle for this reason.

Application No. JPS63233825 known in the art relates to an air duct for use in vehicles. The air duct subject to the invention is manufactured with blow molding. There is a latch piece on the air duct. This latch piece is configured to be bent for use in assembly after air duct manufacturing. However, this type of structure is not sufficient to solve all the problems required by the art. In the art, the assembly of the air duct with the parts to which it is connected can take time and cannot always be connected with the assembly methods known in the art. The fact that the inner part of the air duct cannot be shaped in the blow molding restricts the assembly methods. Manufacturing costs increases and unwanted increases may occur in the volume of space allocated for assembly for this reason.

All the problems mentioned above have made it necessary to make an innovation in the relevant technical field as a result.

### BRIEF DESCRIPTION OF THE INVENTION

The present invention relates to an air duct in order to eliminate the above-mentioned disadvantages and to bring new advantages to the related technical field.

An purpose of the invention is to provide an assembly duct that is manufactured in blow molding and does not require an assembly part, especially for use in vehicles.

The present invention is at least one air duct with at least one body through which air can pass by being manufactured with blow molding, especially for use in air flow in vehicles, in order to realize all the purposes that are mentioned above and will emerge from the following detailed description. Accordingly, its novelty is that it is characterized in that it comprises at least one connection part having at least one threaded form on it for assembly of said body in a predetermined place, and said connection part for allowing the body to have an internal threaded structure is configured to be positioned in at least one assembly position in which it is folded towards inner side of the body by at least partially bending from at least one manufacturing position in which it is formed in the blow molding. Thus, it is ensured that the air duct produced with blow molding can be assembled in predetermined places with its internal threaded structure.

A possible embodiment of the invention is characterized in that there is at least one extension part between the connection part and the body in order to provide freedom of movement of the connection part between the manufacturing position and the assembly position. Thus, it is ensured that the connection part can be leaned against the inner side of the body without undesirable tensile forces.

A possible embodiment of the invention is characterized in that to allow its bending, said extension is made of thinner thickness than the body. Thus, it is ensured that the connection part can be bended by the user more easily than the body.

A possible embodiment of the invention is characterized in that there is at least one space between the body and the connection part when in the assembly position. Thus, the space is widened when air passes through the air duct, thereby the sealing feature is improved.

A possible embodiment of the invention is characterized in that the threaded form located on the connection part and providing attachment to a vehicle part, is reverse-angled in such a way that the vehicle part is easy to engage the body and difficult to disengage. Thus, unwanted dislocation and detachment are prevented during the use of the air duct.

Another possible embodiment of the invention characterized in that the connection part is located on at least one of the at least one first mount and at least one second mount of the body. Thus, it is ensured that the body is fixed in a predetermined place through its mounts that allow air to pass through.

Another possible embodiment of the invention is characterized in that it comprises at least one expanding form in which the connection part can be placed in the body while in the assembly position. Thus, it is prevented that the connection part affects the air velocity.

### BRIEF DESCRIPTION OF THE FIGURES

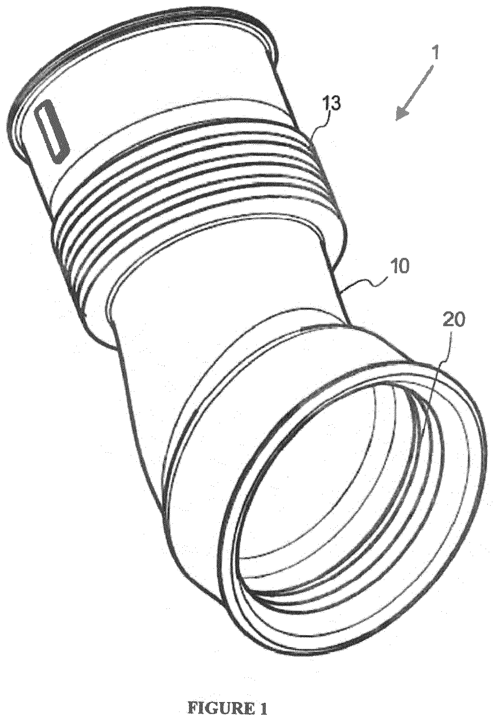

A representative perspective view of the air duct of the invention is given in Figure 1.

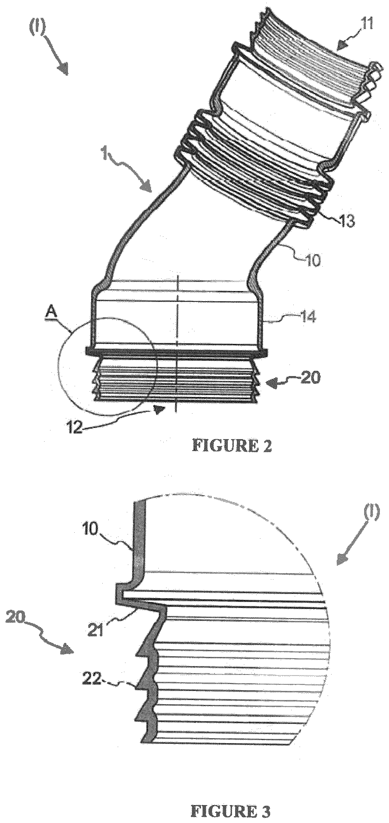

A representative frontal view of the air duct of the invention at the manufacturing position is given in Figure 2.

A representative cross-sectional view of the section A of the air duct of the invention is given in Figure 3.

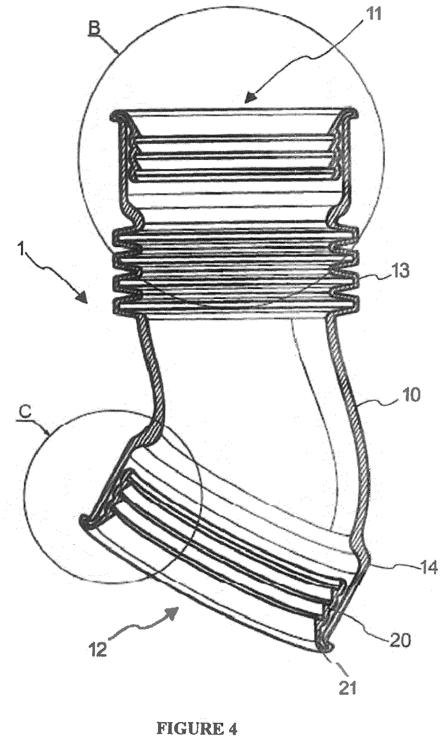

A representative cross-sectional view of the air duct of the invention at the assembly position is given in Figure 4.

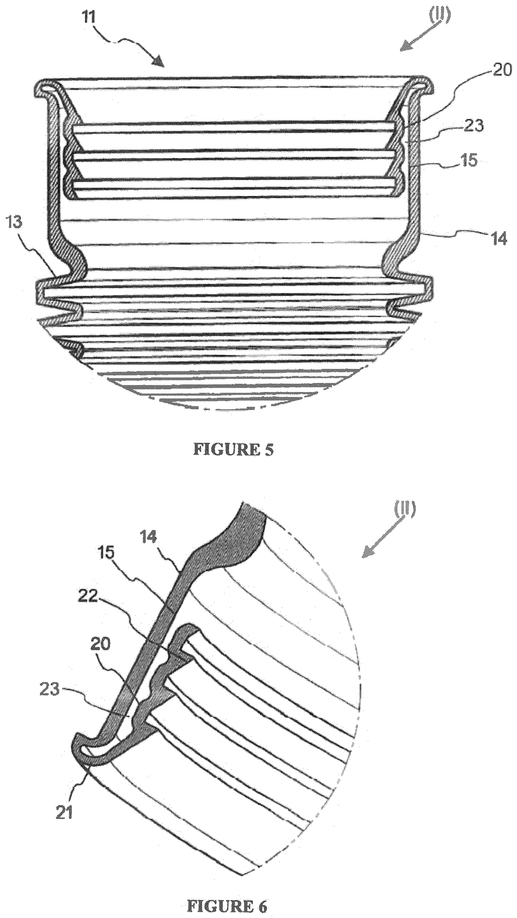

A representative cross-sectional view of section B at the assembly position of the air duct of the invention is given in Figure 5.

A representative cross-sectional view of the section C of the air duct of the invention at the assembly position is given in Figure 6.

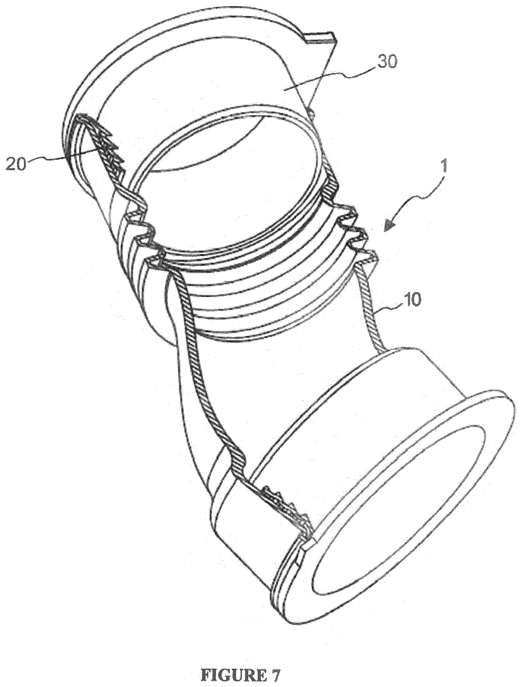

A representative cross-sectional view of the air duct of the invention at the assembly position is given in Figure 7.

### DETAILED DESCRIPTION OF THE INVENTION

The subject of the invention is explained with examples that do not have any limiting effect only for a better understanding of the subject in this detailed description.

A representative perspective view of the air duct (1) of the invention is given in Figure 1. Accordingly, said air duct (1) is used in vehicles. The air duct (1) is especially used in engine ventilation systems. The air duct (1) allows the air purified from the filter to be transmitted to the turbocharger. These air ducts (1) are also known in the art as fresh air ducts (1).

A representative frontal view of the air duct (1) of the invention at the manufacturing position (I) is given in Figure 2. Accordingly, the air duct (1) is preferably manufactured with blow molding. The thermoplastic raw material with low melt flow index flows slowly downwards with the effect of gravity in the form of a hose through the closed mold in the blow molding method. A nozzle extends into parison and air enters once the hose is long enough. The plastic is pushed towards the walls by means of compressed air in a way that it takes the shape of the mold and after it is sufficiently cooled, the mold is opened and the air duct (1) is removed.

The air duct (1) has at least one body (10) through which air can pass. The body (10) is essentially in the form of a tube. There are at least one first mount (11) and at least one second mount (12) on opposite sides of the body (10). Said first mount (11) and the second mount (12) allow air to enter the body (10) and discharge air from the body (10). The first mount (11) and the second mount (12) are fixable on at least one vehicle part (30). The vehicle part (30) may be a filter, turbocharger or a different element used in their connection as mentioned earlier. There is at least a bellows part (13) on the body (10). Said bellows (13) enables the first mount (11) and the second mount (12) of the body (10) to be at least partially stretched relative to each other and the air duct (1) to be deformed at predetermined tolerances. It is easy to manufacture the air duct (1) and to assemble it to the vehicle part (30) in this way.

A representative cross-sectional view of the section A of the air duct (1) of the invention is given in Figure 3. Accordingly, there is at least one connection part (20) on the body (10). The connection part (20) is preferably located on at least one of the first mount (11) and the second mount (12). The connection part (20) enables the body (10) to be fixed to a predetermined place. The connection part (20) may be displaced between an assembly position (II) and a manufacturing position (I), at least partially bending around itself where it connects to the body (10). The manufacturing position (I) is the form in which the connection part (20) is produced together with the body (10). Parison is shaped in the mold with compressed air after being placed in the inner space of the mold in the blow molding method. Meanwhile, the connection part (20) is shaped besides shaping the body (10).

There is at least one threaded form (22) on the connection part (20). Said threaded form (22) is preformed on the blow mold and is formed by blowing the raw material. The threaded form (22) enables the air duct (1) to be connected to a predetermined vehicle part. There may also be a different connection protrusion (tab, slot, step, tube, etc.) that can provide fixation besides the threaded form (22) in this part. The threaded form (22) located on the connection part (20)and providing attachment to the vehicle part (30), is reverse-angled in such a way that the vehicle part (30) easily engages the body (10) and increases the disengaging force. The angle, thread length, pitch, and number of the threaded form (22) are configured to increase the holding force. The thread form is arranged at an angle of 30° in the direction of advance during the entry of the vehicle part (30). It is possible to assemble with a low force in this way. The force required for removal is increased by means of the threaded form (22), which is arranged at a right angle of approximately 90° to the direction of movement during the removal of the vehicle part (30).

In addition, there is at least one extension (21) on the side of the connection part (20) facing the body (10). Said extension (21) can bend without stretching towards the inner side (15) of the body (10) by at least partially folding the connection part (20) with respect to the body (10). The extension (21) preferably has a thinner thickness than the body (10). It is easy to bend the connection part (20) between the production position (I) and the assembly position (II) in this way. A space (23) is formed between the inner side (15) and the connection part (20) during this bending. This space (23) expands during air flow in the body (10) and contributes to better leaning of the connection part (20) against the vehicle part (30) and improving the sealing effect. Air is transmitted through the air duct (1) at a pressure higher than the atmospheric pressure in a possible embodiment of the invention. An additional force is applied from each region to the outer parts with this compressed air filling into the air duct (1). This pressure force also occurs in the space (23). The connection part (20) is compressed towards the vehicle part (30) with the compressed air filling this space (23). This provides better adhesion and sealing between the connection part (20) and the vehicle part (30) at high pressures.

A representative cross-sectional view of the air duct (1) of the invention at the assembly position (II) is given in Figure 4. Accordingly, the connection part (20) is folded towards the inner side (15) of the body (10) and transferred to the assembly position (II) after the air duct (1) is removed from the blow mold. The connection part (20) is folded towards the inner side (15) of the body (10) in the assembly position (II). The threaded form (22) produced on the outside of the connection part (20) serves as an internal thread for the body (10) by approaching the inner side (15) of the body (10) in this way. In addition, it is ensured that the connection part (20) is comfortably located on the body (10) and its exposure to any tensile forces is prevented by means of the part of the extension (21). In addition, assembly features are improved by stretching the connection part (20) towards the vehicle part (30) thanks to the structure of the space (23).

A representative cross-sectional view of the air duct (1) of the invention at the assembly position (II) is given in Figures 5 and 6. Accordingly, the connection part (20) is preferably located on both the first mount (11) and the second mount (12). The body (10) has at least one expanding form (14) around the first mount (11) and the second mount (12). Said expanding form (14) is the area where the connection part (20) is approached towards the body (10) in the assembly position (II). The expanding form (14) is manufactured in such a way that it is wider in diameter than the body (10). It is prevented in this way that the connection part (20) prevents air from passing through by narrowing down the diameter of the body (10) in the assembly position (II).

The threaded form (22) structure is obtained on the inner side (15) of the air ducts (1) produced with blow molding with this whole embodiment. It is ensured that the air duct (1) is fixed thanks to the connection part (20). This eliminates the need for extra assembly spaces where the air duct (1) will be located. It is ensured that the air duct (1) can be fixed on both sides by providing the connection part (20) on the first mount (11) on the air duct (1). In addition, the connection part (20) has an effect on air passage through the expanding form (14). In addition, the sealing feature is improved during the air passage through the air duct (1) with the structure of the space (23).

The scope of protection of the invention is specified in the attached claims and cannot be limited to those explained for sampling purposes in this detailed description. It is evident that a person skilled in the art may exhibit similar embodiments in light of above-mentioned facts without departing from the main theme of the invention.

### REFERENCE NUMBERS GIVEN IN THE FIGURES

- 1: Air Duct

- 10: Body
- 11: First Mount
- 12: Second Mount
- 13: Bellows
- 14: Expanding Form
- 15: Inner Side

- 20: Connection Part
- 21: Extension
- 22: Threaded Form
- 23: Space

- 30: Vehicle Part

- (I): Manufacturing Position
- (II): Assembly Position

## Claims

1. At least one air duct (1) with at least one body (10) through which air can pass by being manufactured with blow molding, especially for use in air flow in vehicles ***characterized in that*** it comprises at least one connection part (20) with at least one threaded form (22) on it for assembly of said body (10) in a predetermined place, and said connection part (20) for allowing the body (10) to have an internal threaded structure is configured to be positioned in at least one assembly position (II) in which it is folded towards the inner side (15) of the body (10) by at least partially bending from at least one manufacturing position (I) in which it is formed in the blow molding.

2. An air duct (1) according to claim 1, ***characterized in that*** there is at least one extension (21) between the connection part (20) and the body (10) in order to provide freedom of movement of the connection part (20) between the manufacturing position (I) and the assembly position (II).

3. An air duct (1) according to claim 1, ***characterized in that*** to allow its bending, said extension (21) is made with lower thickness than the body (10).

4. An air duct (1) according to claim 1, ***characterized in that*** there is at least one space (23) between the body (10) and the connection part (20) when in the assembly position (II).

5. An air duct (1) according to claim 1, ***characterized in that*** the threaded form (22) located on the connection part (20) and providing attachment to a vehicle part (30), is reverse-angled in such a way that the vehicle part (30) is easy to engage the body (10) and difficult to disengage.

6. An air duct (1) according to claim 1, ***characterized in that*** the connection part (20) is located on at least one of the at least one first mount (11) and at least one second mount (12) of the body (10).

7. An air duct (1) according to claim 1, ***characterized in that*** it comprises at least one expanding form (14) in which the connection part (20) can be placed in the body (10) when it is in the assembly position (II).
